# EUROPEAN PATENT SPECIFICATION

(11) **EP 4 339 160 B1**
(45) Date of publication and mention of the grant of the patent: **15.04.2026**
(21) Application number: 23197318.1
(22) Date of filing: 14.09.2023
(51) Int. Cl.: C01G 30/02, C01G 33/00, C01G 35/00, H01M 10/0562

(54) **ALIOVALENT MULTI-CATION DOPING OF LI-GARNET FOR STABILIZATION OF CUBIC LLZO**
ALIOVALENTE MULTIKATIONENDOTIERUNG VON LI-GRANAT ZUR STABILISIERUNG VON KUBISCHEM LLZO
DOPAGE MULTICATION ALIOVALENT DE GRENAT DE LI POUR LA STABILISATION DE LLZO CUBIQUE

(30) Priority: 16.09.2022 US 202263407528 P; 01.11.2022 US 202263421281 P; 23.02.2023 US 202318113417
(43) Date of publication of application: 20.03.2024
(73) Proprietor: Samsung Electronics Co., Ltd., Suwon-si, Gyeonggi-do 16677 (KR)
(72) Inventor: CROSS, Samuel, San Jose CA 95134 (US); WANG, Yan, San Jose CA 95134 (US); AMACHRAA, Mahdi, San Jose CA 95134 (US)
(74) Representative: Kuhnen & Wacker Patent- und Rechtsanwaltsbüro PartG mbB

(56) References cited:
- EP-A1- 3 439 072
- WO-A1-2019/094359
- WO-A1-2021/224637
- US-A1- 2018 301 754
- US-A1- 2021 280 901
- US-A1- 2022 044 837

## Description

### BACKGROUND

### 1. Field

Materials according to embodiments relate to solid electrolyte materials for Li solid-state batteries.

### 2. Description of the Related Art

Solid electrolyte materials are an essential component of solid-state Li-ion batteries, as they enable transport of Li ions while blocking formation of Li metal dendrites that can short circuit the device. Oxide-based solid electrolytes are particularly desirable, due to favorable properties such as high hardness, and electrochemical stability against air and Li metal. However, oxide electrolytes typically have lower conductivity for Li-ions relative to liquid, gel, or sulfide electrolytes, limiting the application of these materials.

Li-garnet (LLZO) is one of the most promising classes of oxide materials for use as a solid electrolyte for Li solid-state batteries, due to its high conductivity and wide electrochemical stability window.

However, undoped Li-garnet (Li₇La₃Zr₂O₁₂) adopts a tetragonal crystal structure at room temperature, which does not provide sufficient Li-ion conductivity for practical application in a solid-state battery.

The primary strategy to address this is to incorporate substitutional dopants that stabilize the high-temperature cubic crystal structure, which can produce a room temperature conductivity in excess of 1 mS/cm.

In particular, some approaches include the following: (1) Ta-LLZO / Nb-LLZO: Li-garnet with cubic phase stabilized through substitution of Zr for Ta or Nb, inducing Li vacancies. Compositions include Li₇₋ₓLa₃TaₓZr₂₋ₓO₁₂ and Li₇₋ₓLa₃NbₓZr₂₋ₓO₁₂ with x~0.4. (2) Al-LLZO / Ga-LLZO: Li-garnet with cubic phase stabilized through substitution of Li for Al or Ga. Compositions include Li₇₋₃ₓAlₓLa₃Zr₂O₁₂ and Li₇₋₃ₓGaₓLa₃Zr₂O₁₂ with x~0.2. (3) Li₇₋₃ₓM1ₓM2_{y}M3_{2-y}M4O₁₂, M1: Al, M2: Nb, Ta, Sb, Bi, M3: Zr, M4: La.

A widely recognized method for improving the Li-ion conductivity of Li-garnet is substitutional doping which induces Li vacancies in excess of 0.4 per formula unit, resulting in stabilization of the high-temperature cubic LLZO phase at room temperature. Examples of Zr-site doping: Li_{6.5}La₃Zr_{1.5}Ta_{0.5}O₁₂, Li_{6.5}La₃Zr_{1.5}Nb_{0.5}O₁₂. Examples of Li-site doping: Li_{6.4}Al_{0.2}La₃Zr₂O₁₂, Li_{6.4}Ga_{0.2}La₃Zr₂O₁₂.

Specifically, a widely used method for stabilizing the cubic LLZO structure is through substitutions of higher valance elements that induce formation of Li vacancies of at least 0.5 per formula unit, e.g., Li_{6.5}La₃Zr_{1.5}Ta_{0.5}O₁₂ with Ta⁵⁺ dopants in the Zr⁴⁺ sites, and Li_{6.4}Al_{0.2}La₃Zr₂O₁₂ with Al³⁺ dopants in the Li⁺ sites. The published patent application US 2022/044837 A1 discloses LLZO materials for Li solid-state batteries according to prior art.

However, drawbacks of doping methods which induce Li vacancies include: decrease of attainable conductivity due to decreased Li content; Li-site dopants (e.g., Al³⁺, Fe³⁺, Ga³⁺) can decrease Li-ion conductivity by occupying sites used for Li-ion hopping; and higher cost of many elements used for substitutional doping.

Thus, there is a need for improvement in the materials used as solid electrolytes for Li solid-state batteries.

Information disclosed in this Background section has already been known to or derived by the inventors before or during the process of achieving the embodiments of the present application, or is technical information acquired in the process of achieving the embodiments. Therefore, it may contain information that does not form the prior art that is already known to the public.

### SUMMARY

The disclosure provides materials used as solid electrolytes for Li solid-state batteries, according to embodiments.

According to an embodiment, there are new lithium garnet material compositions with new doping strategies that incorporate multiple dopants into the parent Li₇La₃Zr₂O₁₂ material, which stabilize the cubic LLZO structure without inducing Li vacancies. Potential benefits of this multi-dopant strategy are (1) higher conductivity, due to higher retained Li content, (2) higher stability due to entropy benefits associated with larger number of dopants, and (3) lower cost, as synergistic effects of multiple dopants allows use of lower cost elements.

An embodiment includes new lithium garnet material compositions with cubic phase through substitutions of multiple aliovalent cation dopants for Zr in the parent Li₇La₃Zr₂O₁₂ material, such that the overall Li content remains 7 per formula unit. In order to stabilize the cubic LLZO phase, at least one dopant is selected from the group of 2+ and 3+ cations Y, In, Mg, Ca, Ba, Sc, Sr, Ru and at least one dopant is selected from the group of 5+ and 6+ cations Ta, Nb, Mo, Sb, Te such that the overall oxidation state of all Zr substitutions averages to 4+, and the Li stoichiometry of the material is unchanged. The entropic stabilization may also be increased through additional substitutions of isovalent dopants for Zr from the group Hf, Ti, Sn, Si so long as the stabilization of the cubic LLZO phase is maintained.

An embodiment demonstrates an approach to stabilize cubic garnet with Li content of 7 per formula unit, through substitution of Zr (4+) with a combination of subvalent (2+ and 3+) and supervalent (5+, 6+) cations to maintain overall charge balance in the Zr site.

Thus, an embodiment includes a material having the following formula:

Li_{7+δ}La₃Zr_{2-x-y-z}M1ₓM2_{y}M3_{z}O₁₂

where M1 is one or a combination of Y, In, Mg, Ca, Ba, Sc, Sr, Ru with oxidation number (valence) lower than 4+, M2 is one or a combination of Bi, Ta, Nb, Mo, Sb, Te, W with oxidation number (valence) higher than 4+, and M3 is one or a combination of Hf, Ti, Ge, Sn, Si with oxidation number (valence) equal to 4+, subject to 0<x≤0.5, 0<y≤1, 0≤z≤0.5, 0<x+y+z≤2, and -0.2<δ<0.2.

Another embodiment of the material includes a lithium garnet material having the following formula:

Li_{7+δ}La₃Zr_{2-x-y-z}M1ₓM2_{y}M3_{z}O₁₂

where M1 is one or a combination of Y, In, Mg, Ca, Ba, Sc, Sr, Ru with oxidation number (valence) lower than 4+, M2 is one or a combination of Bi, Ta, Nb, Mo, Sb, Te with oxidation number (valence) higher than 4+, and M3 is one or a combination of Hf, Ti, Sn, Si with oxidation number (valence) equal to 4+, subject to 0<x≤0.5, 0<y≤1, 0≤z≤0.5, 0<x+y+z≤2, and -0.2<δ<0.2.

Another embodiment of the material includes a lithium garnet material having the following formula:

Li_{7+δ}La₃Zr_{2-x-y-z}M1ₓM2_{y}M3_{z}O₁₂

where M1 is one or a combination of Y, In, Mg, Ca, Ba, Sr, Ru with oxidation number (valence) lower than 4+, M2 is one or a combination of Bi, Ta, Nb, Mo, Sb, Te, W with oxidation number (valence) higher than 4+, and M3 is one or a combination of Hf, Ti, Sn, Si with oxidation number (valence) equal to 4+, subject to 0<x≤0.5, 0<y≤1, 0≤z≤0.5, 0<x+y+z≤2, and -0.2<δ<0.2.

Another embodiment of the material includes a lithium oxide solid-state electrolyte material comprising:

Li_{7+δ}La₃Zr_{2-x-y-z}M1ₓM2_{y}M3_{z}O₁₂

wherein:
M1 is one or a combination of subvalent 2+ or 3+ Zr-site dopants Y, In, Mg, Ca, Ba, Sc, Sr, Ru,
M2 is one or a combination of supervalent 5+ or 6+ Zr-site dopants Bi, Ta, Nb, Mo, Sb, Te,
M3 is one or a combination of isovalent 4+ Zr-site dopants Ti, Hf, Ge, Sn, Si,
0<x≤0.5, 0<y≤1, 0≤z≤0.5, 0<x+y+z≤2, and -0.2<8<0.2, and
the material has a cubic LLZO crystal structure which is stabilized at room temperature.

Another embodiment of the material includes a lithium oxide solid-state electrolyte material comprising:

Li_{7+δ}La₃Zr_{2-x-y-z}M1ₓM2_{y}M3_{z}O₁₂

wherein:
M1 is one or a combination of subvalent 2+ or 3+ Zr-site dopants Y, In, Mg, Ca, Ba, Sr, Ru
M2 is one or a combination of supervalent 5+ or 6+ Zr-site dopants Bi, Ta, Nb, Mo, Sb, Te, W,
M3 is one or a combination of isovalent 4+ Zr-site dopants Ti, Hf, Ge, Sn, Si,
0<x≤0.5, 0<y≤1, 0≤z≤0.5, 0<x+y+z≤2, and -0.2<δ<0.2, and
the material has a cubic LLZO crystal structure which is stabilized at room temperature.

Another embodiment of the material includes a material which retains a cubic LLZO phase at room temperature and which has the formula:

Li_{7+δ}La₃Zr_{2-x-y-z}M1ₓM2_{y}M3_{z}O₁₂

where M1 is one or a combination of Y, In, Mg, Ca, Ba, Sc, Sr, Ru with oxidation number (valence) lower than 4+, M2 is one or a combination of Bi, Ta, Nb, Mo, Sb, Te with oxidation number (valence) higher than 4+, and M3 is one or a combination of Hf, Ti, Sn, Si with oxidation number (valence) equal to 4+, subject to 0<x≤0.5, 0<y≤1, 0≤z≤0.5, 0<x+y+z≤2, and -0.2<δ<0.2.

Another embodiment of the material includes a material which retains a cubic LLZO phase at room temperature and which has the formula:

Li_{7+δ}La₃Zr_{2-x-y-z}M1ₓM2_{y}M3_{z}O₁₂

where M1 is one or a combination of Y, In, Mg, Ca, Ba, Sr, Ru with oxidation number (valence) lower than 4+, M2 is one or a combination of Bi, Ta, Nb, Mo, Sb, Te, W with oxidation number (valence) higher than 4+, and M3 is one or a combination of Hf, Ti, Sn, Si with oxidation number (valence) equal to 4+, subject to 0<x≤0.5, 0<y≤1, 0≤z≤0.5, 0<x+y+z≤2, and -0.2<δ<0.2.

Another embodiment is a solid state lithium battery comprising a cathode active material layer, an anode active material layer, and a solid electrolyte layer formed between the cathode active material layer and the anode active material layer, wherein the solid electrolyte layer comprises any of the aforementioned materials.

### BRIEF DESCRIPTION OF DRAWINGS

Example embodiments of the inventive concept will be more clearly understood from the following detailed description taken in conjunction with the accompanying drawings in which:
FIG. 1 is an XRD pattern with Rietveld refinement for Example 3,
FIG. 2 is an XRD pattern with Rietveld refinement for Example 4,
FIG. 3 is an XRD pattern with Rietveld refinement for Comparative Example 2, and
FIG. 4 is an XRD pattern with Rietveld refinement for Comparative Example 7.

### DETAILED DESCRIPTION OF EXAMPLE EMBODIMENTS

The embodiments of the disclosure described herein are example embodiments, and thus, the disclosure is not limited thereto, and may be realized in various other forms. Each of the embodiments provided in the following description is not excluded from being associated with one or more features of another example or another embodiment also provided herein or not provided herein but consistent with the disclosure. For example, even if matters described in a specific example or embodiment are not described in a different example or embodiment thereto, the matters may be understood as being related to or combined with the different example or embodiment, unless otherwise mentioned in descriptions thereof. In addition, it should be understood that all descriptions of principles, aspects, examples, and embodiments of the disclosure are intended to encompass structural and functional equivalents thereof. In addition, these equivalents should be understood as including not only currently well-known equivalents but also equivalents to be developed in the future.

As used herein, expressions such as "at least one of," when preceding a list of elements, modify the entire list of elements and do not modify the individual elements of the list. For example, the expression, "at least one of a, b and c," should be understood as including only a, only b, only c, both a and b, both a and c, both b and c, or all of a, b and c. Herein, when a term "same" is used to compare a dimension of two or more elements, the term may cover a "substantially same" dimension.

The Li-garnet material has great technological relevance due to its potential application as a solid electrolyte material for Li-ion batteries, due to its high hardness, wide electrochemical stability, and high Li-ion conductivity. However, the base material Li₇La₃Zr₂O₁₂ forms a low conductivity tetragonal crystal structure at room temperature, so modifications are needed to attain sufficient Li-ion conductivity for applications as a solid electrolyte. As mentioned above, a widely used method for improving the conductivity of Li garnet is through incorporation of dopants that induce Li vacancies, which result in the stabilization of the high conductivity cubic phase. The most relevant examples of this are substitutions of Ta⁵⁺ or Nb⁵⁺ for Zr⁴⁺ (e.g., Li_{6.5}La₃Zr_{1.5}Ta_{0.5}O₁₂, Li_{6.5}La₃Zr_{1.5}Nb_{0.5}O₁₂), or substitutions of Al³⁺, Fe³⁺, or Ga³⁺ for Li⁺ (e.g., Li_{6.4}Al_{0.2}La₃Zr₂O₁₂, Li_{6.4}Fe_{0.2}La₃Zr₂O₁₂, Li_{6.4}Ga_{0.2}La₃Zr₂O₁₂). Stabilization of cubic garnet through this method has been shown to occur when substitutions induce Li vacancies of at least 0.5 per formula unit.

An alternate approach to stabilization of cubic garnet without generation of significant amount of Li vacancies is an embodiment which includes stabilization of cubic garnet without generation of significant amount of Li vacancies through substitution of multiple aliovalent cations for Zr⁴⁺ in the lithium garnet structure. The multi cation substitutions generate disorder that stabilizes the cubic garnet phase at room temperature, while maintaining the Li content at around 7 per formula unit. The key aspect of this embodiment is the inclusion of at least one supervalent (5+ and 6+) dopant and one subvalent (2+ and 3+) dopant (taken from the list in Table 1 below), such that the overall charge balance is maintained without shifting the Li content of the material.

**Table 1: List of candidate dopants**

| Element | Expected oxidation state | Dopant type (Zr site) |
|---|---|---|
| Ba | 2+ | Subvalent |
| Ca | 2+ | Subvalent |
| Mg | 2+ | Subvalent |
| Sr | 2+ | Subvalent |
| Ru | 2+ | Subvalent |
| Y | 3+ | Subvalent |
| In | 3+ | Subvalent |
| Hf | 4+ | Isovalent |
| Sn | 4+ | Isovalent |
| Ti | 4+ | Isovalent |
| Si | 4+ | Isovalent |
| Bi | 5+ | Supervalent |
| Ta | 5+ | Supervalent |
| Nb | 5+ | Supervalent |
| Sb | 5+ | Supervalent |
| Mo | 6+ | Supervalent |
| W | 6+ | Supervalent |
| Te | 6+ | Supervalent |

Benefits of the multi-cation substitution method are:
1) Higher conductivity of cubic Li-garnet electrolyte, due to higher retained Li content relative to cubic garnet stabilized via Li vacancy formation;
2) Thermodynamic stabilization of the material due to higher configurational entropy, increasing resistance to electrochemical decomposition; and
3) Ability to incorporate subvalent 2+ and 3+ dopants into the Zr site, with potential benefits to cost or desirable secondary properties of the material. Substitution of subvalent elements for Zr is normally unfeasible in this material, as charge balance would require Li>7 which is very energetically unfavorable.

Thus, as a general matter, an embodiment includes a material having the following formula:

Li_{7+δ}La₃Zr_{2-x-y-z}M1ₓM2_{y}M3_{z}O₁₂

where M1 is one or a combination of Y, In, Mg, Ca, Ba, Sc, Sr, Ru with oxidation number (valence) lower than 4+, M2 is one or a combination of Bi, Ta, Nb, Mo, Sb, Te, W with oxidation number (valence) higher than 4+, and M3 is one or a combination of Hf, Ti, Ge, Sn, Si with oxidation number (valence) equal to 4+, subject to 0<x≤0.5, 0<y≤1, 0≤z≤0.5, 0<x+y+z≤2, and -0.2<δ<0.2.

The materials in an embodiment are therefore those which retain the high-conductivity cubic LLZO phase at room temperature, and have a composition formula of the form:

Li_{7+δ}La₃Zr_{2-x-y-z}M1ₓM2_{y}M3_{z}O₁₂

where M1 is one or a combination of Y, In, Mg, Ca, Ba, Sc, Sr, Ru with oxidation number (valence) lower than 4+, M2 is one or a combination of Bi, Ta, Nb, Mo, Sb, Te with oxidation number (valence) higher than 4+, and M3 is one or a combination of Hf, Ti, Sn, Si with oxidation number (valence) equal to 4+, subject to 0<x≤0.5, 0<y≤1, 0≤z≤0.5, 0<x+y+z≤2, and -0.2<δ<0.2.

The materials in another embodiment are therefore those which retain the high-conductivity cubic LLZO phase at room temperature, and have a composition formula of the form:

Li_{7+δ}La₃Zr_{2-x-y-z}M1ₓM2_{y}M3_{z}O₁₂

where M1 is one or a combination of Y, In, Mg, Ca, Ba, Sr, Ru with oxidation number (valence) lower than 4+, M2 is one or a combination of Bi, Ta, Nb, Mo, Sb, Te, W with oxidation number (valence) higher than 4+, and M3 is one or a combination of Hf, Ti, Sn, Si with oxidation number (valence) equal to 4+, subject to 0<x≤0.5, 0<y≤1, 0≤z≤0.5, 0<x+y+z≤2, and -0.2<δ<0.2.

Thus, an embodiment includes a lithium garnet material having the following formula:

Li_{7+δ}La₃Zr_{2-x-y-z}M1ₓM2_{y}M3_{z}O₁₂

where M1 is one or a combination of Y, In, Mg, Ca, Ba, Sc, Sr, Ru with oxidation number (valence) lower than 4+, M2 is one or a combination of Bi, Ta, Nb, Mo, Sb, Te with oxidation number (valence) higher than 4+, and M3 is one or a combination of Hf, Ti, Sn, Si with oxidation number (valence) equal to 4+, subject to 0<x≤0.5, 0<y≤1, 0≤z≤0.5, 0<x+y+z≤2, and -0.2<δ<0.2.

Another embodiment includes a lithium garnet material having the following formula:

Li_{7+δ}La₃Zr_{2-x-y-z}M1ₓM2_{y}M3_{z}O₁₂

where M1 is one or a combination of Y, In, Mg, Ca, Ba, Sr, Ru with oxidation number (valence) lower than 4+, M2 is one or a combination of Bi, Ta, Nb, Mo, Sb, Te, W with oxidation number (valence) higher than 4+, and M3 is one or a combination of Hf, Ti, Sn, Si with oxidation number (valence) equal to 4+, subject to 0<x≤0.5, 0<y≤1, 0≤z≤0.5, 0<x+y+z≤2, and -0.2<δ<0.2.

Another embodiment includes a lithium oxide solid-state electrolyte material comprising:

Li_{7+δ}La₃Zr_{2-x-y-z}M1ₓM2_{y}M3_{z}O₁₂

wherein:
M1 is one or a combination of subvalent 2+ or 3+ Zr-site dopants Y, In, Mg, Ca, Ba, Sc, Sr, Ru,
M2 is one or a combination of supervalent 5+ or 6+ Zr-site dopants Bi, Ta, Nb, Mo, Sb, Te,
M3 is one or a combination of isovalent 4+ Zr-site dopants Ti, Hf, Ge, Sn, Si,
0<x≤0.5, 0<y≤1, 0≤z≤0.5, 0<x+y+z≤2, and -0.2<δ<0.2, and
the material has a cubic LLZO crystal structure which is stabilized at room temperature.

Another embodiment includes a lithium oxide solid-state electrolyte material comprising:

Li_{7+δ}La₃Zr_{2-x-y-z}M1ₓM2_{y}M3_{z}O₁₂

wherein:
M1 is one or a combination of subvalent 2+ or 3+ Zr-site dopants Y, In, Mg, Ca, Ba, Sr, Ru,
one or a combination of supervalent 5+ or 6+ Zr-site dopants Bi, Ta, Nb, Mo, Sb, Te, W,
M3 is one or a combination of isovalent 4+ Zr-site dopants Ti, Hf, Ge, Sn, Si,
0<x≤0.5, 0<y≤1, 0≤z≤0.5, 0<x+y+z≤2, and -0.2<δ<0.2, and
the material has a cubic LLZO crystal structure which is stabilized at room temperature.

M1 is preferably one or a combination of two or more of Y, Mg, and Ca. In a preferred embodiment, M1 is one or a combination of Y and Mg or one or a combination of Ca and Mg. In a preferred embodiment, M1 is one of Y, Mg, and Ca. In one preferred embodiment, M1 is Y. In another preferred embodiment, M1 is Mg. In still another preferred embodiment, M1 is Ca.

M2 is preferably one or a combination of two or more of Ta, Nb, and Sb. In a preferred embodiment, M2 is one of Ta, Nb, and Sb. In one preferred embodiment, M2 is Ta. In another preferred embodiment, M2 is Nb. In still another preferred embodiment, M2 is Sb.

M3 is preferably one or a combination of two or more of Sn, Hf, and Ge. In a preferred embodiment, M3 is Sn.

In a preferred embodiment, 0<x≤0.25. In a preferred embodiment, 0<y≤0.5. In another preferred embodiment, 0<y≤0.25. In a preferred embodiment, 0≤z≤0.25.

A method of preparing the oxide is the solid-state method. In this method, precursor powders are combined in a certain ratio depending on the composition of the target material. In a typical preparation, precursors may consist of lithium carbonate, lanthanum hydroxide, zirconium oxide, and at least one precursor containing each of the included metals M1, M2, and M3. Examples of metal precursors include metal oxides, hydroxides, carbonates, and nitrates. In particular, the compounds described in this invention may be prepared using, for instance, the precursors tantalum oxide, niobium oxide, bismuth oxide, molybdenum oxide, tungsten oxide, tellurium hydroxide, titanium oxide, tin oxide, hafnium oxide, germanium oxide, silicon oxide, indium oxide, scandium oxide, barium carbonate, magnesium carbonate, calcium carbonate, and strontium carbonate as sources of the associated metal ions.

The precursor mixture may be mixed by a method such as ball milling or planetary milling to produce a homogeneous mixture. Mixing may be done with a suitable solvent such as ethanol, isopropanol, ethylene glycol, or acetone to assist with the uniform dispersion of the precursors.

The precursor mixture may then be heat treated to a temperature of 600C-1100C, for a period of 1 hour to 48 hours to produce an oxide powder with the desired composition and crystal structure.

Subsequently the oxide powder may be compressed using a hydraulic uniaxial press to form a densely packed pellet. Heat treatment may then be applied at a temperature of about 900 °C - 1500 °C for 1 hour to 48 hours to produce a dense pellet which may be used as a solid electrolyte separator in a solid state lithium battery cell.

For instance, the calcined powder may be formed into a pellet through application of uniaxial pressure of 100 - 500 MPa. The pellet may then be heat treated at 1200 °C for 2 hours to form a dense sintered solid electrolyte separator suitable for use in a lithium battery cell.

As an example of making a battery full cell using a garnet solid electrolyte and a Li-metal anode, an ionic liquid electrolyte can be used as the cathode electrolyte (catholyte) and a garnet oxide electrolyte can be used as the Li-metal anode electrolyte, (anolyte). First, 20-µm-thick Li metal on 10-µm-thick Cu foil (Honjo Metal Co., Ltd.) can be attached to the protonated surface of the LLZO pellet by cold-isostatic pressing at 250 MPa. A commercially available NCM111 electrode (loading capacity: 3.2 g cm⁻³, active material: 93 wt%; Samsung SDI) can be coated onto Al foil as the cathode. The ionic liquid Pyr13FSI (Kanto Chemical Co. Inc.) can be mixed with LiFSI salt (2M) to prepare the catholyte. The mixed solution can be dropped onto the cathode and then infiltrated into the cathode under a vacuum for 2 h. The infiltrated amount of ionic liquid can be 20 wt% relative to the cathode weight. The infiltrated cathode can be placed on the other side of the LLZO pellet in a 2032-coin cell. To eliminate the possibility of direct contact between the ionic liquid and Li-metal, a relatively small cathode (0.4 cm in diameter) can be used for the hybrid electrolyte cell. Finally, the cell can be sealed under a vacuum using a pouch cell.

A 110 micrometer pellet of LLZO (garnet) can be used. An even thinner pellet can desirably be made by a method like tape casting, down to 20 micrometer. The garnet electrolyte can have a thickness in the range of 20 - 150 micrometers. Another thickness range for the garnet electrolyte is 20 - 110 micrometers.

An embodiment of the aforementioned materials can be assembled together with a cathode active material layer and an anode active material layer to be used in an embodiment which is a solid state lithium battery comprising a cathode active material layer, an anode active material layer, and a solid electrolyte layer formed between the cathode active material layer and the anode active material layer, wherein the solid electrolyte layer comprises any of the aforementioned materials.

### EXAMPLES

Embodiments will now be illustrated by way of the following examples, which do not limit the embodiments in any way.

Using the standard solid-state method, numerous examples of the Li-garnet with multiple aliovalent dopants substituted for Zr were synthesized following the substitution rules in an embodiment, as described below.

A broad list of tested compositions and XRD results are included in Table 2 to demonstrate the wide applicability of the aliovalent multi-cation doping strategy in this material. The tested compositions included in Table 2 were prepared in the following manner.

### Example 1

The compound Li₇La₃Y_{0.25}Zr_{1.5}Sb_{0.25}O₁₂, which was the target composition for Example 1, was prepared using the precursor powders lithium carbonate, lanthanum hydroxide, zirconium oxide, yttrium oxide, and antimony oxide, mixed in a stoichiometric ratio with the addition of 5 - 50 % excess lithium precursor to mitigate lithium evaporation during heat treatment. The precursor powders were then processed in a planetary mill at 350 rpm for 24 hours using zirconia mixing balls. The precursor mixture was then heat treated at 1000 °C for 8 hours to produce a powder of the desired composition and crystal structure.

### Examples 2-6 and Comparative Examples 1-9

The compounds described in Examples 2-6 and Comparative Examples 1-9 were prepared in a manner similar to that described above in Example 1, but using precursors tantalum oxide, niobium oxide, titanium oxide, tin oxide, silicon oxide, magnesium carbonate, and calcium carbonate as sources of the associated metal ions.

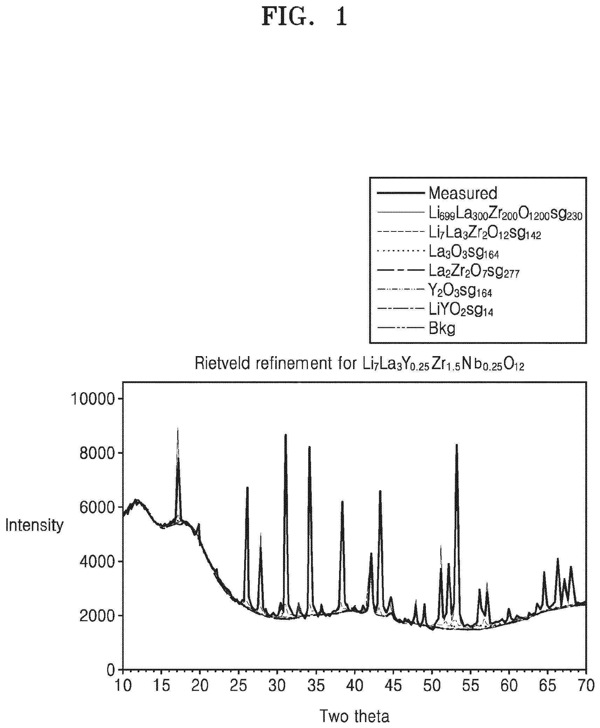

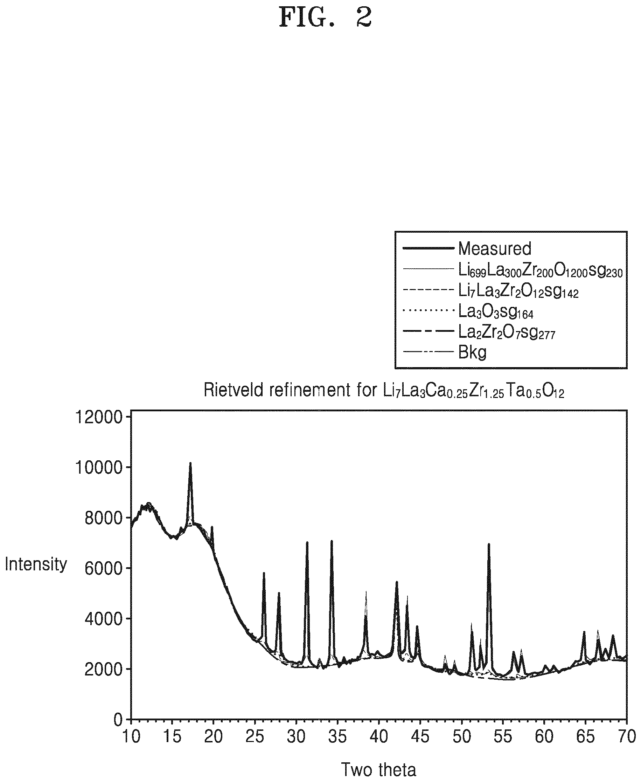

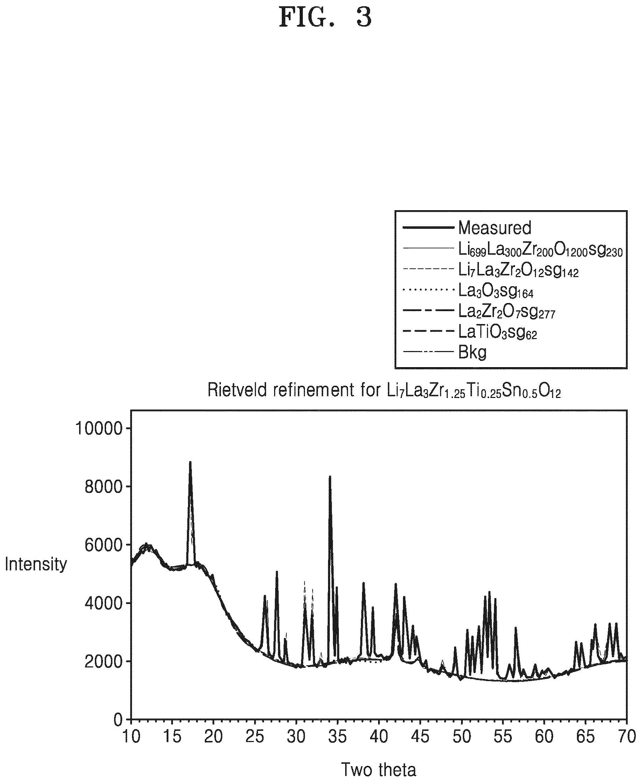

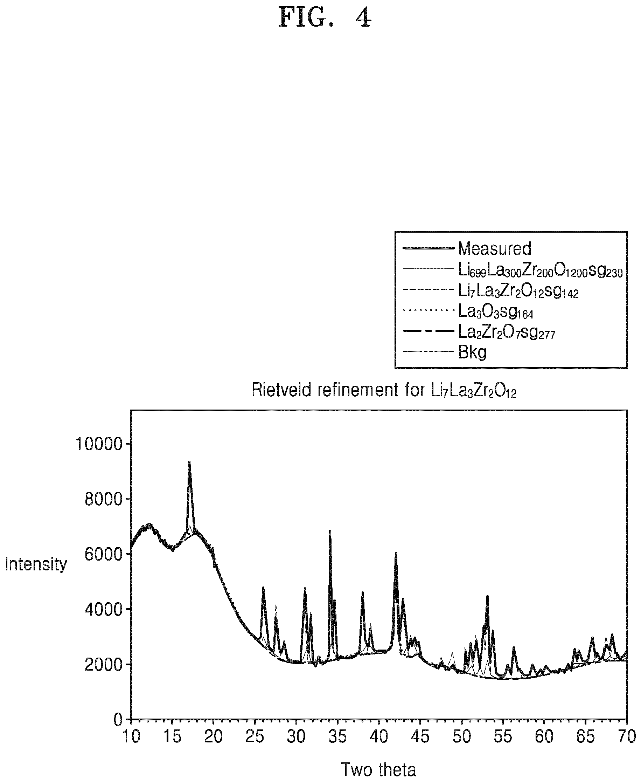

The synthesized materials were characterized via XRD to confirm the presence of the cubic garnet phase at room temperature, as well as SEM/EDS to confirm that the dopants have been incorporated into the parent structure. As controls, numerous samples of the undoped Li garnet material as well as multi-doped Li garnet that substitutes multiple isovalent dopants for Zr (Hf, Ti, Sn, Si) were also synthesized, as set forth above. In all cases, in the undoped material or isovalent multi-cation doping, the material was confirmed by XRD to form the low conductivity tetragonal phase, confirming that the incorporation of the aliovalent dopants is necessary for the stabilization of the cubic phase. The results are shown in Table 2 below. XRD patterns with Rietveld refinement for selected samples are shown in FIGS. 1 - 4, illustrating the tetragonal structure for the undoped and isovalent multi-cation doped material and the cubic structure for the aliovalent multi-cation doped material. In particular, FIGS. 1 - 4 show XRD results for representative samples, with Rietveld refinement fitting for cubic LLZO (blue) and tetragonal LLZO (yellow), as follows. FIG. 1 shows a positive result: cubic LLZO stabilized by aliovalent Zr-site doping with Y³⁺, Nb⁵⁺ (Example 3); FIG. 2 shows a positive result: cubic LLZO stabilized by aliovalent Zr-site doping with Ca²⁺, Ta⁵⁺ (Example 4); FIG. 3 shows a negative result: tetragonal LLZO with isovalent Zr-site doping with Ti⁴⁺, Sn⁴⁺ (Comparative Example 2); and FIG. 4 shows a negative result: undoped tetragonal LLZO (Comparative Example 7).

**Table 2: List of synthesized compositions, with XRD fitting results**

| Sample ID | Target composition | Zr doping type | LLZO phase (purity) |
|---|---|---|---|
| Ex. 1 | Li₇La₃Y_{0.25}Zr_{1.5}Sb_{0.25}O₁₂ | Aliovalent | Cubic (95 wt.%) |
| Ex. 2 | Li₇La₃Y_{0.25}Zr_{1.5}Ta_{0.25}O₁₂ | Aliovalent | Cubic (89 wt.%) |
| Ex. 3 | Li₇La₃Y_{0.25}Zr_{1.5}Nb_{0.25}O₁₂ | Aliovalent | Cubic (94 wt.%) |
| Ex. 4 | Li₇La₃Ca_{0.25}Zr_{1.25}Ta_{0.5}O₁₂ | Aliovalent | Cubic (97 wt.%) |
| Ex. 5 | Li₇La₃Mg_{0.25}Zr_{1.25}Nb_{0.5}O₁₂ | Aliovalent | Cubic (98 wt.%) |
| Ex. 6 | Li₇La₃Mg_{0.25}Zr_{1.25}Ta_{0.5}O₁₂ | Aliovalent | Cubic (98 wt.%) |
| Comp. Ex. 1 | Li₇La₃Ti_{0.25}Zr_{1.5}Sn_{0.25}O₁₂ | Isovalent | Tetragonal (100 wt.%) |
| Comp. Ex. 2 | Li₇La₃Ti_{0.25}Zr_{1.25}Sn_{0.5}O₁₂ | Isovalent | Tetragonal (100 wt.%) |
| Comp. Ex. 3 | Li₇La₃Si_{0.25}Zr_{1.25}Sn_{0.5}O₁₂ | Isovalent | Tetragonal (97 wt.%) |
| Comp. Ex. 4 | Li₇La₃Ti_{0.25}ZrSn_{0.75}O₁₂ | Isovalent | Tetragonal (99 wt.%) |
| Comp. Ex. 5 | Li₇La₃Ti_{0.25}Zr_{0.5}Sn_{1.25}O₁₂ | Isovalent | Tetragonal (100 wt.%) |
| Comp. Ex. 6 | Li₇La₃Ti_{0.5}Zr_{0.5}Sn_{1.25}O₁₂ | Isovalent | Tetragonal (97 wt.%) |
| Comp. Ex. 7 | Li₇La₃Zr₂O₁₂ | Undoped | Tetragonal (99 wt.%) |
| Comp. Ex. 8 | Li₇La₃Zr₂O₁₂ | Undoped | Tetragonal (99 wt.%) |
| Comp. Ex. 9 | Li₇La₃Zr₂O₁₂ | Undoped | Tetragonal (98 wt.%) |

As shown above, Table 2 presents a list of synthesized compositions, with XRD fitting results showing LLZO phase purity and crystal structure. In all cases, aliovalent Zr-site doping stabilized cubic LLZO while retaining a nominal Li content of 7 per formula unit, while isovalent doping and undoped samples produced tetragonal LLZO at room temperature.

### Examples 7 and 8 and Comparative Example 10

The compounds described in Examples 7 and 8 and Comparative Example 10 were prepared in a manner similar to that described above in Example 1, but using the precursor powders lithium carbonate, lanthanum hydroxide, zirconium oxide, tantalum oxide, and magnesium carbonate in Example 7, the precursor powders lithium carbonate, lanthanum hydroxide, zirconium oxide, tantalum oxide, and yttrium oxide in Example 8, and the precursor powders lithium carbonate, lanthanum hydroxide, and zirconium oxide in Comparative Example 10 (undoped LLZO). Further, the samples were sintered at 1200 °C for 8 hours, and then the room temperature conductivity of each sample was measured, with the results that were obtained being shown in Table 3 below.

**Table 3: Conductivity results**

| Sample ID | Composition | Sintering | Room Temp. Conductivity |
|---|---|---|---|
| Ex. 7 | Li₇La₃Zr_{1.25}Mg_{0.25}Ta_{0.5}O₁₂ | 1200 °C, 8h | 2.8x10⁻⁵ S/cm |
| Ex. 8 | Li₇La₃ZrY_{0.5}Ta_{0.5}O₁₂ | 1200 °C, 8h | 8.9x10⁻⁶ S/cm |
| Comp. Ex. 10 | Li₇La₃Zr₂O₁₂ | 1200 °C, 8h | 2.1x10⁻⁷ S/cm |

As can be seen from the results set forth in Table 3, the Mg-Ta-LLZO and Y-Ta-LLZO compositions both had significantly higher conductivity than updoped LLZO, with an improvement of >40x for Y-Ta-LLZO and >100x for Mg-Ta-LLZO. Further, samples sintered at 1100 °C showed similar trends, but much lower conductivity than those sintered at 1200 °C. Also, a cleaning treatment with phosphoric acid and ethanol produced much better electrochemical impedance spectroscopy (EIS) results than sandpaper alone, namely, lower resistance and a better fit to equivalent circuit model.

The experimental results demonstrate the utility of the multi-doping strategy of the disclosure and the excellent properties of multi-doped samples of the disclosure.

Thus, as mentioned above, an embodiment which focuses on new lithium garnet material compositions with new doping strategies that incorporate multiple dopants into the parent Li₇La₃Zr₂O₁₂ material, which stabilize the cubic LLZO structure without inducing Li vacancies, has potential benefits including (1) higher conductivity, due to higher retained Li content, (2) higher stability due to entropy benefits associated with larger number of dopants, and (3) lower cost, as synergistic effects of multiple dopants allows use of lower cost elements.

The foregoing is illustrative of exemplary embodiments and is not to be construed as limiting the disclosure. Although a few exemplary embodiments have been described, those skilled in the art will readily appreciate that many modifications are possible in the above embodiments without materially departing from the disclosure.

## Claims

1. A material having the following formula:
Li_{7+δ}La₃Zr_{2-x-y-z}M1ₓM2_{y}M3_{z}O₁₂
where M1 is one or a combination of two or more of Y, In, Mg, Ca, Ba, Sc, Sr, and Ru with oxidation number lower than 4+, M2 is one or a combination of two or more of Bi, Ta, Nb, Mo, Sb, Te, and W with oxidation number higher than 4+, and M3 is one or a combination of two or more of Hf, Ti, Ge, Sn, and Si with oxidation number equal to 4+, subject to 0<x≤0.5, 0<y≤1, 0≤z≤0.5, 0<x+y+z≤2, and -0.2<δ<0.2.

2. The material of claim 1, wherein the material is a lithium garnet material having the following formula:
Li_{7+δ}La₃Zr_{2-x-y-z}M1ₓM2_{y}M3_{z}O₁₂
where M1 is one or a combination of two or more of Y, In, Mg, Ca, Ba, Sc, Sr, and Ru with oxidation number lower than 4+, M2 is one or a combination of two or more of Bi, Ta, Nb, Mo, Sb, and Te with oxidation number higher than 4+, and M3 is one or a combination of two or more of Hf, Ti, Sn, and Si with oxidation number equal to 4+, subject to 0<x≤0.5, 0<y≤1, 0≤z≤0.5, 0<x+y+z≤2, and -0.2<δ<0.2.

3. The material of claim 1, wherein the material is a lithium garnet material having the following formula:
Li_{7+δ}La₃Zr_{2-x-y-z}M1ₓM2_{y}M3_{z}O₁₂
where M1 is one or a combination of two or more of Y, In, Mg, Ca, Ba, Sr, and Ru with oxidation number lower than 4+, M2 is one or a combination of two or more of Bi, Ta, Nb, Mo, Sb, Te, and W with oxidation number higher than 4+, and M3 is one or a combination of two or more of Hf, Ti, Sn, and Si with oxidation number equal to 4+, subject to 0<x≤0.5, 0<y≤1, 0≤z≤0.5, 0<x+y+z≤2, and -0.2<δ<0.2.

4. The material of claim 1, wherein the material is a lithium oxide solid-state electrolyte material comprising:
Li_{7+δ}La₃Zr_{2-x-y-z}M1ₓM2_{y}M3_{z}O₁₂
wherein:
M1 is one or a combination of two or more of subvalent 2+ or 3+ Zr-site dopants selected from Y, In, Mg, Ca, Ba, Sc, Sr, and Ru,
M2 is one or a combination of two or more of supervalent 5+ or 6+ Zr-site dopants selected from Bi, Ta, Nb, Mo, Sb, and Te,
M3 is one or a combination of two or more of isovalent 4+ Zr-site dopants selected from Ti, Hf, Ge, Sn, and Si,
0<x≤0.5, 0<y≤1, 0≤z≤0.5, 0<x+y+z≤2, and -0.2<8<0.2, and
the material has a cubic LLZO crystal structure which is stabilized at room temperature.

5. The material of claim 1, wherein the material is a lithium oxide solid-state electrolyte material comprising:
Li_{7+δ}La₃Zr_{2-x-y-z}M1ₓM2_{y}M3_{z}O₁₂
wherein:
M1 is one or a combination of two or more of subvalent 2+ or 3+ Zr-site dopants selected from Y, In, Mg, Ca, Ba, Sr, and Ru,
M2 is one or a combination of two or more of supervalent 5+ or 6+ Zr-site dopants selected from Bi, Ta, Nb, Mo, Sb, Te, and W,
M3 is one or a combination of two or more of isovalent 4+ Zr-site dopants selected from Ti, Hf, Ge, Sn, and Si,
0<x≤0.5, 0<y≤1, 0≤z≤0.5, 0<x+y+z≤2, and -0.2<δ<0.2, and
the material has a cubic LLZO crystal structure which is stabilized at room temperature.

6. The material of claim 1, wherein the material retains a cubic LLZO phase at room temperature and has the formula:
Li_{7+δ}La₃Zr_{2-x-y-z}M1ₓM2_{y}M3_{z}O₁₂
where M1 is one or a combination of two or more of Y, In, Mg, Ca, Ba, Sc, Sr, and Ru with oxidation number lower than 4+, M2 is one or a combination of two or more of Bi, Ta, Nb, Mo, Sb, and Te with oxidation number higher than 4+, and M3 is one or a combination of two or more of Hf, Ti, Sn, and Si with oxidation number equal to 4+, subject to 0<x≤0.5, 0<y≤1, 0≤z≤0.5, 0<x+y+z≤2, and -0.2<δ<0.2.

7. The material of claim 1, wherein the material retains a cubic LLZO phase at room temperature and has the formula:
Li_{7+δ}La₃Zr_{2-x-y-z}M1ₓM2_{y}M3_{z}O₁₂
where M1 is one or a combination of two or more of Y, In, Mg, Ca, Ba, Sr, and Ru with oxidation number lower than 4+, M2 is one or a combination of two or more of Bi, Ta, Nb, Mo, Sb, Te, and W with oxidation number higher than 4+, and M3 is one or a combination of two or more of Hf, Ti, Sn, and Si with oxidation number equal to 4+, subject to 0<x≤0.5, 0<y≤1, 0≤z≤0.5, 0<x+y+z≤2, and -0.2<δ<0.2.

8. The material of claim 1, wherein M1 comprises Y.

9. The material of claim 1, wherein M1 comprises Mg.

10. The material of claim 1, wherein M1 comprises Ca.

11. The material of claim 1, wherein M2 comprises Ta.

12. The material of claim 1, wherein M2 comprises Nb.

13. The material of claim 1, wherein M2 comprises Sb.

14. The material of claim 8, wherein M2 comprises at least one of Sb, Ta, and Nb.

15. The material of claim 9, wherein M2 comprises at least one of Ta and Nb.

16. The material of claim 10, wherein M2 comprises Ta.

17. The material of claim 1, wherein M1 comprises Mg and M2 comprises Ta.

18. The material of claim 1, wherein M1 comprises Y and M2 comprises Ta.

19. A solid state lithium battery comprising a cathode active material layer, an anode active material layer, and a solid electrolyte layer formed between the cathode active material layer and the anode active material layer, wherein the solid electrolyte layer comprises the material of claim 1.

20. The solid state lithium battery of claim 19, wherein the solid electrolyte layer has a thickness of 20 - 150 micrometers.

## Patentansprüche

1. Ein Material mit der folgenden Formel:
Li_{7+δ}La₃Zr_{2-x-y-z}M1ₓM2_{y}M3_{z}O₁₂
wobei M1 eines oder eine Kombination aus zwei oder mehr der Elemente Y, In, Mg, Ca, Ba, Sc, Sr und Ru mit einer Oxidationszahl von weniger als 4+ ist, M2 eines oder eine Kombination von zwei oder mehr der Elemente Bi, Ta, Nb, Mo, Sb, Te und W mit einer Oxidationszahl von mehr als 4+ ist, und M3 eines oder eine Kombination von zwei oder mehr der Elemente Hf, Ti, Ge, Sn und Si mit einer Oxidationszahl von 4+ ist, wobei 0<x≤0,5, 0<y≤1, 0≤z≤0,5, 0<x+y+z≤2 und -0,2<δ<0,2.

2. Das Material nach Anspruch 1, wobei das Material ein Lithium-Granat-Material mit der folgenden Formel ist:
Li_{7+δ}La₃Zr_{2-x-y-z}M1ₓM2_{y}M3_{z}O₁₂
wobei M1 eines oder eine Kombination von zwei oder mehr der Elemente Y, In, Mg, Ca, Ba, Sc, Sr und Ru mit einer Oxidationszahl von weniger als 4+ ist, M2 eines oder eine Kombination von zwei oder mehr der Elemente Bi, Ta, Nb, Mo, Sb und Te mit einer Oxidationszahl von mehr als 4+ ist, und M3 eines oder eine Kombination von zwei oder mehr der Elemente Hf, Ti, Sn und Si mit einer Oxidationszahl von 4+ ist, wobei 0<x≤0,5, 0<y≤1, 0≤z≤0,5, 0<x+y+z≤2 und -0,2<δ<0,2.

3. Das Material nach Anspruch 1, wobei das Material ein Lithium-Granat-Material mit der folgenden Formel ist:
Li_{7+δ}La₃Zr_{2-x-y-z}M1ₓM2_{y}M3_{z}O₁₂
wobei M1 eines oder eine Kombination von zwei oder mehr der Elemente Y, In, Mg, Ca, Ba, Sr und Ru mit einer Oxidationszahl von weniger als 4+ ist, M2 eines oder eine Kombination von zwei oder mehr der Elemente Bi, Ta, Nb, Mo, Sb, Te und W mit einer Oxidationszahl von mehr als 4+ ist, und M3 eines oder eine Kombination von zwei oder mehr der Elemente Hf, Ti, Sn und Si mit einer Oxidationszahl von 4+ ist, wobei 0<x≤0,5, 0<y≤1, 0≤z≤0,5, 0<x+y+z≤2 und -0,2<δ<0,2.

4. Das Material nach Anspruch 1, wobei das Material ein Lithiumoxid-Festkörperelektrolytmaterial ist, umfassend:
Li_{7+δ}La₃Zr_{2-x-y-z}M1ₓM2_{y}M3_{z}O₁₂
wobei:
M1 eines oder eine Kombination von zwei oder mehr subvalenten 2+ oder 3+ Dotiermitteln für Zr-Stellen ist, ausgewählt aus Y, In, Mg, Ca, Ba, Sc, Sr und Ru,
M2 eines oder eine Kombination von zwei oder mehr übervalenten 5+ oder 6+ Dotiermitteln für Zr-Stellen ist, ausgewählt aus Bi, Ta, Nb, Mo, Sb und Te,
M3 eines oder eine Kombination von zwei oder mehr isovalenten 4+ Dotiermitteln für Zr-Stellen ist, ausgewählt aus Ti, Hf, Ge, Sn und Si,
0<x≤0,5, 0<y≤1, 0≤z≤0,5, 0<x+y+z≤2 und -0,2<δ<0,2, und
das Material eine kubische LLZO-Kristallstruktur aufweist, die bei Raumtemperatur stabilisiert ist.

5. Das Material nach Anspruch 1, wobei das Material ein Lithiumoxid-Festkörperelektrolytmaterial ist, umfassend:
Li_{7+δ}La₃Zr_{2-x-y-z}M1ₓM2_{y}M3_{z}O₁₂
wobei:
M1 eines oder eine Kombination von zwei oder mehr subvalenten 2+ oder 3+ Dotiermitteln für Zr-Stellen ist, ausgewählt aus Y, In, Mg, Ca, Ba, Sr und Ru,
M2 ein oder eine Kombination von zwei oder mehr übervalenten 5+ oder 6+ Dotiermitteln für Zr-Stellen ist, ausgewählt aus Bi, Ta, Nb, Mo, Sb, Te und W,
M3 ein oder eine Kombination von zwei oder mehr isovalenten 4+ Dotiermitteln für Zr-Stellen ist, ausgewählt aus Ti, Hf, Ge, Sn und Si,
0<x≤0,5, 0<y≤1, 0≤z≤0,5, 0<x+y+z≤2 und -0,2<δ<0,2, und
das Material eine kubische LLZO-Kristallstruktur aufweist, die bei Raumtemperatur stabilisiert ist.

6. Das Material nach Anspruch 1, wobei das Material bei Raumtemperatur eine kubische LLZO-Phase beibehält, und die folgende Formel aufweist:
Li_{7+δ}La₃Zr_{2-x-y-z}M1ₓM2_{y}M3_{z}O₁₂
wobei M1 eines oder eine Kombination von zwei oder mehr der Elemente Y, In, Mg, Ca, Ba, Sc, Sr und Ru mit einer Oxidationszahl von weniger als 4+ ist, M2 eines oder eine Kombination von zwei oder mehr der Elemente Bi, Ta, Nb, Mo, Sb und Te mit einer Oxidationszahl von mehr als 4+ ist, und M3 eines oder eine Kombination von zwei oder mehr der Elemente Hf, Ti, Sn und Si mit einer Oxidationszahl von 4+ ist, wobei 0<x≤0,5, 0<y≤1, 0≤z≤0,5, 0<x+y+z≤2 und -0,2<δ<0,2.

7. Das Material nach Anspruch 1, wobei das Material bei Raumtemperatur eine kubische LLZO-Phase beibehält, und die folgende Formel aufweist:
Li_{7+δ}La₃Zr_{2-x-y-z}M1ₓM2_{y}M3_{z}O₁₂
wobei M1 eines oder eine Kombination von zwei oder mehr der Elemente Y, In, Mg, Ca, Ba, Sr und Ru mit einer Oxidationszahl von weniger als 4+ ist, M2 eines oder eine Kombination von zwei oder mehr der Elemente Bi, Ta, Nb, Mo, Sb, Te und W mit einer Oxidationszahl von mehr als 4+ ist, und M3 eines oder eine Kombination von zwei oder mehr der Elemente Hf, Ti, Sn und Si mit einer Oxidationszahl von 4+ ist, wobei 0<x≤0,5, 0<y≤1, 0≤z≤0,5, 0<x+y+z≤2 und -0,2<δ<0,2.

8. Das Material nach Anspruch 1, wobei M1 Y umfasst.

9. Das Material nach Anspruch 1, wobei M1 Mg umfasst.

10. Das Material nach Anspruch 1, wobei M1 Ca umfasst.

11. Das Material nach Anspruch 1, wobei M2 Ta umfasst.

12. Das Material nach Anspruch 1, wobei M2 Nb umfasst.

13. Das Material nach Anspruch 1, wobei M2 Sb umfasst.

14. Das Material nach Anspruch 8, wobei M2 mindestens eines von Sb, Ta und Nb umfasst.

15. Das Material nach Anspruch 9, wobei M2 mindestens eines von Ta und Nb umfasst.

16. Das Material nach Anspruch 10, wobei M2 Ta umfasst.

17. Das Material nach Anspruch 1, wobei M1 Mg umfasst und M2 Ta umfasst.

18. Das Material nach Anspruch 1, wobei M1 Y umfasst und M2 Ta umfasst.

19. Eine Festkörper-Lithiumbatterie, umfassend eine Kathoden-Aktivmaterialschicht, eine Anoden-Aktivmaterialschicht und eine Festelektrolytschicht, die zwischen der Kathoden-Aktivmaterialschicht und der Anoden-Aktivmaterialschicht ausgebildet ist, wobei die Festelektrolytschicht das Material nach Anspruch 1 umfasst.

20. Die Festkörper-Lithiumbatterie nach Anspruch 19, wobei die Festelektrolytschicht eine Dicke von 20 bis 150 Mikrometern aufweist.

## Revendications

1. Un matériau ayant la formule suivante :
Li_{7+δ}La₃Zr_{2-x-y-z}M1ₓM2_{y}M3_{z}O₁₂
où M1 est un ou une combinaison de deux ou plusieurs des éléments Y, In, Mg, Ca, Ba, Sc, Sr et Ru ayant un nombre d'oxydation inférieur à 4+, M2 est l'un ou une combinaison de deux ou plusieurs des éléments Bi, Ta, Nb, Mo, Sb, Te et W ayant un nombre d'oxydation supérieur à 4+, et M3 est l'un ou une combinaison de deux ou plusieurs des éléments Hf, Ti, Ge, Sn et Si ayant un nombre d'oxydation égal à 4+, où 0<x≤0,5, 0<y≤1, 0≤z≤0,5, 0<x+y+z≤2 et -0,2<δ<0,2.

2. Le matériau selon la revendication 1, dans lequel le matériau est un matériau à base de grenat de lithium ayant la formule suivante :
Li_{7+δ}La₃Zr_{2-x-y-z}M1ₓM2_{y}M3_{z}O₁₂
où M1 est un ou une combinaison de deux ou plusieurs des éléments Y, In, Mg, Ca, Ba, Sc, Sr et Ru ayant un nombre d'oxydation inférieur à 4+, M2 est un ou une combinaison de deux ou plusieurs des éléments Bi, Ta, Nb, Mo, Sb et Te ayant un nombre d'oxydation supérieur à 4+, et M3 est un ou une combinaison de deux ou plusieurs des éléments Hf, Ti, Sn et Si ayant un nombre d'oxydation égal à 4+, où 0<x≤0,5, 0<y≤1, 0≤z≤0,5, 0<x+y+z≤2 et -0,2<δ<0,2.

3. Le matériau selon la revendication 1, dans lequel le matériau est un matériau à base de grenat de lithium ayant la formule suivante :
Li_{7+δ}La₃Zr_{2-x-y-z}M1ₓM2_{y}M3_{z}O₁₂
où M1 est un ou une combinaison de deux ou plusieurs des éléments Y, In, Mg, Ca, Ba, Sr et Ru ayant un nombre d'oxydation inférieur à 4+, M2 est un ou une combinaison de deux ou plusieurs des éléments Bi, Ta, Nb, Mo, Sb, Te et W ayant un nombre d'oxydation supérieur à 4+, et M3 est un ou une combinaison de deux ou plusieurs des éléments Hf, Ti, Sn et Si ayant un nombre d'oxydation égal à 4+, où 0<x≤0,5, 0<y≤1, 0≤z≤0,5, 0<x+y+z≤2 et -0,2<δ<0,2.

4. Le matériau selon la revendication 1, dans lequel le matériau est un matériau électrolytique à l'état solide à base d'oxyde de lithium comprenant :
Li_{7+δ}La₃Zr_{2-x-y-z}M1ₓM2_{y}M3_{z}O₁₂
dans lequel :
M1 est un ou une combinaison de deux ou plusieurs dopants sous-valents 2+ ou 3+ pour des sites Zr choisis parmi Y, In, Mg, Ca, Ba, Sc, Sr et Ru,
M2 est un ou une combinaison de deux ou plusieurs dopants supervalents 5+ ou 6+ pour des sites Zr choisis parmi Bi, Ta, Nb, Mo, Sb et Te,
M3 est un ou une combinaison de deux ou plusieurs dopants isovalents 4+ pour des sites Zr choisis parmi Ti, Hf, Ge, Sn et Si,
0<x≤0,5, 0<y≤1, 0≤z≤0,5, 0<x+y+z≤2 et -0,2<δ<0,2, et
le matériau a une structure cristalline cubique LLZO qui est stabilisée à température ambiante.

5. Le matériau selon la revendication 1, dans lequel le matériau est un matériau électrolytique à l'état solide à base d'oxyde de lithium comprenant :
Li_{7+δ}La₃Zr_{2-x-y-z}M1ₓM2_{y}M3_{z}O₁₂
dans lequel :
M1 est un ou une combinaison de deux ou plusieurs dopants sous-valents 2+ ou 3+ pour des sites Zr choisis parmi Y, In, Mg, Ca, Ba, Sr et Ru,
M2 est un ou une combinaison de deux ou plusieurs dopants supervalents 5+ ou 6+ pour des sites Zr choisis parmi Bi, Ta, Nb, Mo, Sb, Te et W,
M3 est un ou une combinaison de deux ou plusieurs dopants isovalents 4+ pour des sites Zr choisis parmi Ti, Hf, Ge, Sn et Si,
0<x≤0,5, 0<y≤1, 0≤z≤0,5, 0<x+y+z≤2 et -0,2<δ<0,2, et
le matériau a une structure cristalline cubique LLZO qui est stabilisée à température ambiante.

6. Le matériau selon la revendication 1, dans lequel le matériau conserve une phase cubique LLZO à température ambiante et ayant la formule :
Li_{7+δ}La₃Zr_{2-x-y-z}M1ₓM2_{y}M3_{z}O₁₂
où M1 est un ou une combinaison de deux ou plusieurs des éléments Y, In, Mg, Ca, Ba, Sc, Sr et Ru ayant un nombre d'oxydation inférieur à 4+, M2 est un ou une combinaison de deux ou plusieurs des éléments Bi, Ta, Nb, Mo, Sb et Te ayant un nombre d'oxydation supérieur à 4+, et M3 est un ou une combinaison de deux ou plusieurs des éléments Hf, Ti, Sn et Si ayant un nombre d'oxydation égal à 4+, où 0<x≤0,5, 0<y≤1, 0≤z≤0,5, 0<x+y+z≤2 et -0,2<δ<0,2.

7. Le matériau selon la revendication 1, dans lequel le matériau conserve une phase LLZO cubique à température ambiante et ayant la formule :
Li_{7+δ}La₃Zr_{2-x-y-z}M1ₓM2_{y}M3_{z}O₁₂
où M1 est un ou une combinaison de deux ou plusieurs des éléments Y, In, Mg, Ca, Ba, Sr et Ru avec un nombre d'oxydation inférieur à 4+, M2 est un ou une combinaison de deux ou plusieurs des éléments Bi, Ta, Nb, Mo, Sb, Te et W avec un nombre d'oxydation supérieur à 4+, et M3 est un ou une combinaison de deux ou plusieurs des éléments Hf, Ti, Sn et Si avec un nombre d'oxydation égal à 4+, où 0<x≤0,5, 0<y≤1, 0≤z≤0,5, 0<x+y+z≤2 et -0,2<δ<0,2.

8. Le matériau selon la revendication 1, dans lequel M1 comprend Y.

9. Le matériau selon la revendication 1, dans lequel M1 comprend Mg.

10. Le matériau selon la revendication 1, dans lequel M1 comprend Ca.

11. Le matériau selon la revendication 1, dans lequel M2 comprend Ta.

12. Le matériau selon la revendication 1, dans lequel M2 comprend Nb.

13. Le matériau selon la revendication 1, dans lequel M2 comprend Sb.

14. Le matériau selon la revendication 8, dans lequel M2 comprend au moins l'un parmi Sb, Ta et Nb.

15. Le matériau selon la revendication 9, dans lequel M2 comprend au moins l'un parmi Ta et Nb.

16. Le matériau selon la revendication 10, dans lequel M2 comprend Ta.

17. Le matériau selon la revendication 1, dans lequel M1 comprend Mg et M2 comprend Ta.

18. Le matériau selon la revendication 1, dans lequel M1 comprend Y et M2 comprend Ta.

19. Une batterie au lithium à l'état solide comprenant une couche de matériau actif cathodique, une couche de matériau actif anodique et une couche d'électrolyte solide formée entre la couche de matériau actif cathodique et la couche de matériau actif anodique, dans laquelle la couche d'électrolyte solide comprend le matériau selon la revendication 1.

20. La batterie au lithium à l'état solide selon la revendication 19, dans laquelle la couche d'électrolyte solide a une épaisseur de 20 à 150 micromètres.
